# EUROPÄISCHE PATENTANMELDUNG

(11) **EP 0 941 650 A2**
(43) Veröffentlichungstag der Anmeldung: **15.09.1999**
(21) Anmeldenummer: 99104639.2
(22) Anmeldetag: 09.03.1999
(51) Int. Cl.: A01D 69/02

(54) **Elektromotorisch angetriebenes handgeführtes Arbeitsgerät und Verfahren zu seiner Steuerung**

(30) Priorität: 09.03.1998 DE 19809988
(71) Anmelder: GARDENA Kress + Kastner GmbH, D-89079 Ulm (DE)
(72) Erfinder:
(74) Vertreter: Patentanwälte Ruff, Beier, Schöndorf und Mütschele

(57) **Zusammenfassung**

Bei einem elektromotorisch angetriebenen, handgeführten Arbeitsgerät, insbesondere einem Fadenschneider wird während der Leerlaufphase, d.h., wenn das Gerät nicht im Schneideinsatz ist, die Drehzahl erheblich abgesenkt. Dies kann auch mit einer gewissen Zeitverzögerung erfolgen. Bei erneuter Belastung läuft das Gerät wieder auf Volldrehzahl los.

Bei dem Arbeitsgerät (A) ist es lediglich notwendig, einen Detektor (D) für die Motorbelastung einzufügen. Eine Steuerschaltung (C) steuert beispielsweise einen Tyristor oder Triac (T) an, der die Drehzahl des Motors (M), z.B. durch Phasenanschnitt, reduziert.

## Beschreibung

Die Erfindung betrifft ein elektromotorisch angetriebenes handgeführtes Arbeitsgerät mit einem permanent bewegten Werkzeug und insbesondere ein Verfahren zu seiner Steuerung.

Derartige Arbeitsgeräte finden beispielsweise im privaten Gebrauch Einsatz als motorische Gartengeräte. Werkzeuge bei solchen Arbeitsgeräten sind beispielsweise Messerklingen bei Heckenscheren, Sägeblätter bei Sägen, Messer bei Rasen- oder Bodenbearbeitungsgeräten, Schneidfäden bei Rasentrimmern oder dergleichen. Neben den Arbeitsgeräuschen beim Einsatz des Werkzeugs verursachen die Geräte auch in Situationen, in welchen das Gerät zwar in Betrieb ist, das Werkzeug aber nicht im Einsatz ist und frei läuft, Geräusche durch den Motor und das frei laufende Werkzeug, wobei durch die fehlende Arbeitsbelastung des Werkzeugs typischerweise die Drehzahl des Motors und das daraus resultierende Geräusch nach Lautstärke und Tonhöhe ansteigt. Die Geräusche solcher Geräte werden besonders dann störend empfunden, wenn die Geräte in Wohnumgebungen eingesetzt sind. Zur Begrenzung der Lärmbelastung sind teilweise auch Zulassungsvorschriften für derartige Geräte erlassen worden.

Aus der DE 41 00 611 A1 ist eine Regeleinrichtung für einen Fadentrimmer bekannt, welche die maximale Drehzahl nach oben begrenzt. Aus einer Messung eines dem Motorstrom proportionalen Signals wird ein Steuersignal für ein Thyristorelement zur Regelung der Drehzahl abgeleitet.

Der Erfindung liegt die Aufgabe zugrunde, ein elektromotorisch angetriebenes handgeführtes Arbeitsgerät und ein Verfahren zu seinem Betrieb mit verringerter Geräuschemission sowie ggf. geringerem Energieverbrauch zu schaffen.

Diese Aufgabe wird durch die Ansprüche 1 und 6 gelöst.

Die Erfindung erreicht mit geringem, insbesondere auf eine elektronische Steuerung beschränkbaren Aufwand eine wirkungsvolle Reduzierung des Geräusches und des Energieverbrauches im lastfreien oder gering belasteten Lauf des Werkzeugs, ohne die Leistungsfähigkeit bei Belastung zu beeinträchtigen. Die Bestimmung einer elektrischen Größe als Maß für die Belastung des Motors ist zur Signalgabe für die Drehzahlreduzierung ausreichend. Geeignete Größen als Belastungswert können beispielsweise die momentan aufgenommene elektrische Leistung oder der Motorstrom, gegebenenfalls in Abhängigkeit von der Drehzahl, sein.

Wenn vorteilhaft ein unterer und ein oberer Schwellenwert für die Motorbelastung vorgegeben wird, verhindert die dadurch entstehende Schalthysterese ein zu häufiges Umschalten zwischen den Betriebszuständen Leerlauf und Last bei Motorbelastungen in Schwellwertnähe oder bei schnell schwankenden Lastzuständen. Hierfür kann alternativ oder zusätzlich vorteilhafterweise eine Zeitverzögerung beim Umschalten vom Lastbetrieb in den Leerlaufbetrieb vorgesehen sein, welche ggf. erst nach anhaltendem Unterschreiten eines Schwellenwerts für eine bestimmte Zeitspanne, die für einen Fadenschneider vorteilhafterweise weniger als 1 Sekunde beträgt, aber auch bei einigen Sekunden liegen kann, die Umschaltung in den Leerlaufbetrieb freigibt. Die gegenläufige Umschaltung vom Leerlaufbetrieb in den Lastbetrieb erfolgt vorzugsweise unverzögert sofort nach Detektion einer entsprechenden Belastung des Motors.

Die Reduzierung der Motordrehzahl im Leerlauf steht im Gegensatz zur normalen Charakteristik von bei solchen Arbeitsgeräten üblicherweise verwendeten Universal- oder Gleichstrommotoren, die bei Belastung das Drehmoment bei absinkender Drehzahl erhöhen und im Leerlauf hohe Drehzahlen erreichen, insbesondere bei Geräten, die mit nur einer manuellen Schaltstufe arbeiten, ist die Erfindung vorteilhaft, da sie eine automatische Anpassung an unterschiedliche Arbeitsbedingungen schafft. Auch während des Lastbetriebes kann mit i.w. gleicher Schaltung, wenn gewünscht, eine zusätzliche Anpassung dadurch bewirkt werden, daß die Drehzahl von der Steuerung bei zunehmender Belastung, d.h. Leistungsaufnahme des Werkzeugs, erhöht wird. Insbesondere bei Fadentrimmern kann dadurch die von der Umfangsgeschwindigkeit des Fadens bestimmte Schneidleistung den Gegebenheiten angepasst werden.

Im Lastbetrieb ist vorzugsweise keine weitere Differenzierung von Betriebszuständen vorgesehen, so daß die Steuerung den Motor in diesem Betriebszustand ohne weitere Regelung oder Drosselung mit der Spannungsquelle verbindet und in Vollast betreibt. Die Erfindung ist insbesondere vorteilhaft für Arbeitsgeräte mit einem Betätigungsschalter, der nur eine Einschaltposition ohne weitere Möglichkeit der Leistungssteuerung aufweist. Eine alternative Ausführungsform sieht auch im Lastbetrieb eine stufenlose oder mehrstufige Steuerung des Motors in der Weise vor, daß bei höherer mechanischer Belastung die Motordrehzahl gesteigert wird.

Die Leerlaufdrehzahl liegt vorzugsweise bei weniger als 80 % der maximalen Lastdrehzahl. Die Erfindung ist besonders vorteilhaft für Fadentrimmer als Arbeitsgerät, da bei diesen Geräten auch ein schneller Wechsel von lastfreiem Werkzeug, d.h. frei fliegendem Schneidfaden, zu hoher Lastsituation, beispielsweise bei sehr dicht stehendem Schneidgut oder einem Hindernis im Schneidbereich, nicht zu einer schlagartigen Überlastung des elektromotorischen Antriebs mit Werkzeugstillstand führen kann, sondern lediglich eine Einengung des Schneidkreises bewirken kann. Ferner ist durch das geringe Trägheitsmoment des Schneidfadens mit Kassette bei einem Wechsel zu einer Arbeitsbelastung des zuvor frei laufenden Werkzeugs die Arbeitsdrehzahl schnell erreicht. Bei einem solchen Fadentrimmer als Arbeitsgerät kann daher die Leistungsaufnahme bzw. Drehzahl im Leerlaufbetrieb besonders deutlich reduziert werden. Es kann in diesem Rahmen oder alternativ eine Mindestdrehzahl auch für den Leerlaufbetrieb vorgesehen sein, die das Schneiden schwachen Schnittguts ermöglicht, ohne daß in den Lastbetrieb umgeschaltet wird.

Diese und weitere Merkmale gehen außer aus den Ansprüchen auch aus der Beschreibung und den Zeichnungen hervor, wobei die einzelnen Merkmale jeweils für sich allein oder zu mehreren in Form von Unterkombinationen bei einer Ausführungsform der Erfindung und auf anderen Gebieten verwirklicht sein und vorteilhafte sowie für sich schutzfähige Ausführungen darstellen können, für die hier Schutz beansprucht wird.

Ein Ausführungsbeispiel der Erfindung ist in den Zeichnungen dargestellt und wird im folgenden näher erläutert. In den Zeichnungen zeigen:
- Fig. 1: einen schematischen Aufbau eines Arbeitsgeräts
- Fig. 2: korrespondierende Zeitverläufe verschiedener Betriebsparameter bei zweifachem Lastwechsel

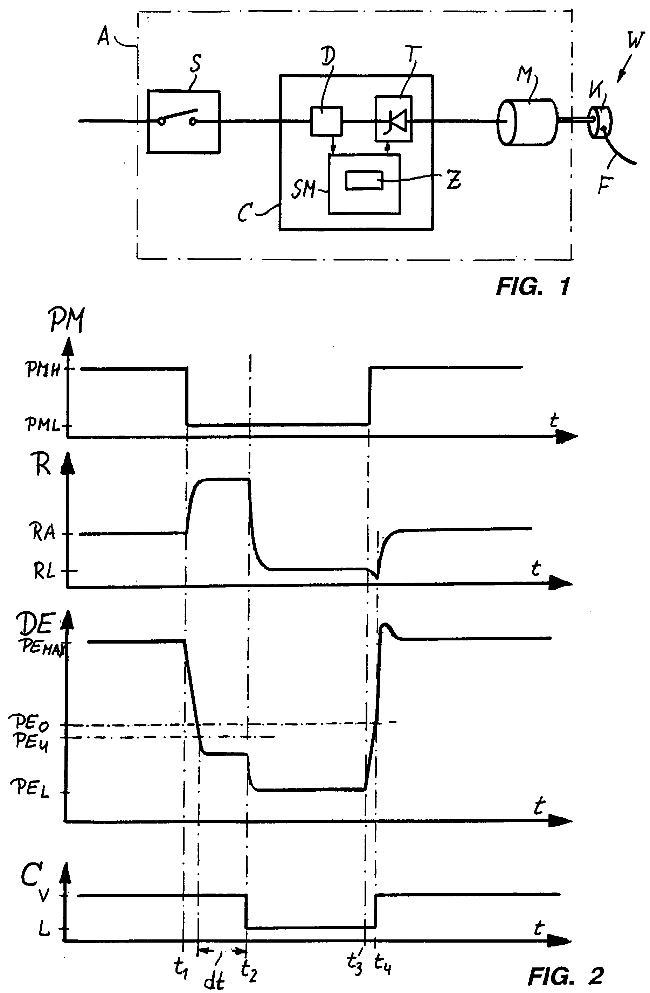

Bei dem in Fig. 1 skizzierten schematischen Aufbau eines Rasentrimmers als Arbeitsgerät A treibt ein Elektromotor M eine Fadenkassette K mit einem Schneidfaden F als Werkzeug W an. Der Motor bezieht elektrische Leistung aus einem Netzanschluß N über einen als einfachen Ein-Aus-Schalter ausgeführten Geräteschalter S. Zwischen dem Geräteschalter S und dem Motor M ist eine elektronische Steuerung C eingefügt. Sie enthält ein Detektiermittel D bzw. ein Sensorelement für die Motorbelastung (Strom oder dgl.), ein Drossel- oder Steuermittel in Form eines Halbleiterbauelements z.B. Thyristors oder Triacs T, und Steuermittel SM. Sie detektiert den Belastungszustand des Motors z.B. über den Motorstrom und den in die elektrische Zuleitung eingefügten Thyristor oder Triac T. So wird die Leistungsaufnahme des Motors nach Maßgabe des gemessenen Belastungszustands eingestellt und dabei insbesondere in einem Zustand geringer oder fehlender Belastung ein Leerlaufwert eingestellt, beispielsweise durch einen bestimmten Winkel einer Phasenanschnittsteuerung. Dies bewirken die Steuermittel SM, die als analoger oder digitaler Schaltkreis aufgebaut sein können, in Abhängigkeit von den Signalen bzw. Ausgangswerten der Detektiermittel D. Für die Detektion des Belastungszustands kann zusätzlich noch ein Drehzahlsignal am Motor abgegriffen und in der Steuerung C berücksichtigt werden. Die Steuerung C kann als einfache analoge Schaltung ausgeführt sein. Die Steuermittel SM enthalten vorzugsweise auch ein Zeitglied Z, das eine Umschaltung vom Vollastbetrieb auf Leerlaufbetrieb erst mit einer voreingestellten Zeitverzögerung zuläßt. Weitere nicht im einzelnen eingezeichnete elektronische Mittel, wie beispielsweise Funkentstörmittel, können zusätzlich vorgesehen sein.

In Fig. 2 sind in mehreren übereinander ausgerichteten Diagrammen mit übereinstimmenden Zeitachsen t Verläufe einer mechanischen Belastung PM des Werkzeugs W bzw. des Motors M, der Motordrehzahl R, der aufgenommenen elektrischen Leistung PE sowie des Schaltzustands in der Steuerung C aufgetragen.

Wenn das Arbeitsgerät A durch Einschalten des Schalters S in Betrieb genommen wird und unter Last arbeitet, z.B. der Fadentrimmer Gras schneidet, liegt eine Lastsituation mit hoher Last PMH vor. Während dieses in Fig. 2 anfänglichen Zeitabschnitts mit hoher Werkzeuglast liegt die Drehzahl des Motors M und des Werkzeugs W bei einer Arbeitsdrehzahl (Lastdrehzahl) RA (s. Diagramm R). Die aufgenommene elektrische Leistung (Diagramm PE) ist maximal mit einem Wert PEmax. Die Steuerung (Diagramm C) steht auf Vollast V.

Bei einem abrupten Wechsel der mechanischen Belastung zu einem Zeitpunkt t1 von hoher Last PMH zu einer niedrigen Last PML, z.B. in einem Zustand leerlaufenden Werkzeuges, steht die Steuerung unverändert auf Vollast V und durch Wegfall der mechanischen Belastung des Werkzeugs W steigt die Drehzahl R des Motors an (Diagramm R). Die elektrische Leistungsaufnahme des Motors M sinkt dabei aber deutlich ab und fällt unter einen unteren Schwellenwert PEU. Die Steuerung C verharrt durch einen durch die intern eingestellte Verzögerung des Zeitgliedes Z bestimmten Zeitraum dt, der beispielsweise weniger als 1 Sekunde betragen kann, noch in der Vollast-Schaltstellung (Diagramm C). Während dieser Zeitspanne läuft der Motor mit erhöhter Drehzahl, aber die Leistungsaufnahme des Motors liegt anhaltend unterhalb des unteren Schwellenwerts PEU (Diagramm PE). Nach Ablauf des Verzögerungsintervalls dt zum Zeitpunkt t2 schaltet die Steuerung C um auf Leerlaufbetrieb L und die vom Motor aufgenommene elektrische Leistung geht auf einen Leerlaufwert PEL zurück. Damit verbunden fällt die Drehzahl des Motors von der erhöhten Drehzahl drastisch ab auf einen niedrigen Wert einer Leerlaufdrehzahl RL mit niedriger Geräuschemission.

Der erneute Einsatz des Arbeitsgerätes, also z.B. das Heranführen eines Rasentrimmers an zu schneidende Pflanzen, bewirkt einen gegenläufigen Lastwechsel zu einem Zeitpunkt t3 von frei laufendem Werkzeug PML zu hoher Belastung PMH. Zum Zeitpunkt t3 fällt durch Einwirkung bzw. Erhöhung der mechanischen Belastung die Motordrehzahl zurück und die aufgenommene elektrische Leistung steigt schnell an. Sie überschreitet zu einem Zeitpunkt t4 einen oberen Schwellenwert PEO. Die Steuerung C reagiert ohne Verzögerung auf diese Schwellenwertüberschreitung und schaltet von Leerlaufbetrieb L um auf Vollast-Betrieb V, wodurch die aufgenommene Leistung PE sprunghaft ansteigt und kurzzeitig auch die im Vollast-Betrieb aufgenommene maximale Leistung PEmax überschreiten kann. Gleichzeitig steigt die Motordrehzahl an und erreicht nach kurzer Zeit wieder die Arbeitsdrehzahl RA. Das Gerät erreicht also ohne wesentliche Verzögerung wieder volle Arbeitsleistung.

Die Erfindung ist nicht auf die beschriebenen Ausführungsbeispiele beschränkt, sondern im Rahmen fachmännischen Könnens auf mancherlei Weise abwandelbar. Die Erfindung ist insbesondere auch bei anderen Geräten als dem als besonders vorteilhaft beschriebenen Fadentrimmer als Arbeitsgerät einsetzbar, insbesondere bei solchen, deren Werkzeug von dem Motor direkt oder zumindest ohne Übersetzungsänderung angetrieben wird.

Neben der allgemein wünschenswerten Reduzierung der Lärmbelastung der Umgebung kann mit der Erfindung auch noch die Einhaltung evtl. in Zulassungsverfahren vorgegebener Grenzwerte für die Lärmemission erreicht werden, ohne die Leistung des Arbeitsgeräts insgesamt, insbesondere auch im subjektiven Empfinden des Benutzers zu reduzieren.

Ferner kann der Energieverbrauch reduziert werden, was insbesondere bei schnurlosen Geräten, z.B. mit Akku-Betrieb, besonders wichtig ist. Durch die geringere Drehzahl im Leerlauf, d.h. in den Phasen, in denen der Benutzer das Arbeitsgerät neu positioniert, ist auch eine Beeinträchtigung des Bentzers durch Berührung des Werkzeugs, die ja stets nur kurzfristig ist, reduziert.

## Patentansprüche

1. Verfahren zur Steuerung eines elektromotorisch angetriebenen, handgeführten Arbeitsgerätes (A) mit einem permanent angetriebenen Werkzeug (W), dadurch gekennzeichnet, daß die Drehzahl (RL) des Elektromotors (M) im Leerlaufbetrieb (L) des Werkzeugs (W) gegenüber der Arbeitsdrehzahl (RA) im Lastbetrieb automatisch reduziert wird.

2. Verfahren nach Anspruch 1, dadurch gekennzeichnet, daß die Drehzahlreduktion in Abhängigkeit von der im Leerlauf sinkenden Leistungsaufnahme des Werkzeugs (W) vorgenommen wird, vorzugsweise in einer Stufe.

3. Verfahren nach Anspruch 1 oder 2, dadurch gekennzeichnet, daß die Drehzahlreduzierung mit einer Zeitverzögerung eingeleitet wird.

4. Verfahren nach einem der vorhergehenden Ansprüche, dadurch gekennzeichnet, daß die Arbeitsdrehzahl (RA) im Lastbetrieb bei steigender Belastung erhöht wird.

5. Verfahren nach einem der vorhergehenden Ansprüche, dadurch gekennzeichnet, daß die Leerlaufdrehzahl (DL) weniger als 80 % der maximalen Arbeitsdrehzahl (RA) im Lastbetrieb beträgt.

6. Elektromotorisch angetriebenes, handgeführtes Arbeitsgerät mit einem von einem Elektromotor (M) permanent bewegten Werkzeug (W), insbesondere Fadentrimmer, und einer Steuerung (S), die Mittel zum Detektieren (D) des Belastungszustandes des Elektromotors (M) und Steuermittel (SM) aufweist, die in Abhängigkeit von der Unterschreitung eines Belastungsschwellenwertes (PEU) eine deutliche Reduzierung der Drehzahl und/oder dessen elektrischer Leistungsaufnahme auf einen Leerlaufwert (RL) bewirken.

7. Arbeitsgerät nach Anspruch 6, dadurch gekennzeichnet, daß die Detektiermittel (D) bei Unterschreiten eines vorgegebenen ersten unteren Belastungsschwellwertes (PEU) ein Signal zur Umschaltung des Elektromotors (M) in den Leerlaufbetrieb (L) mit Begrenzung der Drehzahl des Elektromotors und/oder dessen elektrischer Leistungsaufnahme auf den Leerlaufwert (RL) und bei nachfolgendem Überschreiten eines zweiten oberen Belastungsschwellwertes (PEO) ein Signal zur Umschaltung des Elektromotors (M) in einen elektrischen Lastbetrieb (V) mit höherer Leistungsaufnahme auslösen.

8. Arbeitsgerät nach Anspruch 6 oder 7, dadurch gekennzeichnet, daß der Elektromotor (M) das Werkzeug (W) direkt, vorzugsweise unübersetzt, antreibt.

9. Arbeitsgerät nach einem der Ansprüche 6 bis 8, dadurch gekennzeichnet, daß der elektrische Lastbetrieb (V) nur eine, ggf. manuell schaltbare, Laststufe, insbesondere Voll-Last, aufweist.

10. Arbeitsgerät nach einem der Ansprüche 6 bis 9, dadurch gekennzeichnet, daß die Steuerung (C) Mittel zur Erhöhung der Drehzahl des Motors (M) im Lastbetrieb (V) bei zunehmender Belastung aufweist.

11. Arbeitsgerät nach einem der Ansprüche 6 bis 10, dadurch gekennzeichnet, daß die Steuerung (C) ein Zeitglied (Z) für eine zeitverzögerte Umschaltung in den Leerlaufbetrieb (L) aufweist.
